# EUROPÄISCHE PATENTSCHRIFT

(11) **EP 2 696 953 B1**
(45) Veröffentlichungstag und Bekanntmachung des Hinweises auf die Patenterteilung: **14.09.2022**
(21) Anmeldenummer: 12720445.1
(22) Anmeldetag: 11.04.2012
(51) Int. Cl.: B01D 21/02, C08G 69/02, B01D 5/00, C08G 63/78

(54) **VERFAHREN ZUR KONDENSATION VON DÄMPFEN UNTER VAKUUM**
METHOD FOR THE CONDENSATION OF VAPORS UNDER A VACUUM
PROCÉDÉ DE CONDENSATION DE VAPEURS SOUS VIDE

(30) Priorität: 15.04.2011 DE 102011007543
(43) Veröffentlichungstag der Anmeldung: 19.02.2014
(73) Patentinhaber: Aquafil Engineering GmbH, 13469 Berlin (DE)
(72) Erfinder: KARASIAK, Wolf, 13467 Berlin (DE); KARASIAK, Dirk, 16548 Glienicke/Nordbahn (DE)
(74) Vertreter: Maikowski & Ninnemann Patentanwälte Partnerschaft mbB
(86) Internationale Anmeldenummer: PCT/EP2012/056541
(87) Internationale Veröffentlichungsnummer: WO 2012/140055

(56) Entgegenhaltungen:
- WO-A1-2006/099895
- DE-B- 1 040 018
- GB-A- 970 659
- US-A- 4 376 680

## Beschreibung

Die Erfindung betrifft ein Verfahren zur Kondensation von Dämpfen unter Vakuum.

Es ist bekannt, dass Kondensatoren zur Kondensation von Dämpfen unter Vakuum eine vielfältige Anwendung bei industriellen Herstellungsprozessen finden. Beispielsweise werden Kondensatoren in der Nahrungsmittelindustrie zur Herstellung von verzehrbarem Öl oder Milch verwendet. Weiterhin finden Kondensatoren Anwendung in Destillerien, Salzmanufakturen, Zuckerraffinerien, Ölraffinerien oder in der Papierherstellung. Insbesondere werden sie in Chemiefabriken bei einer Vielzahl von chemischen Herstellungsprozessen verwendet.

Vor allem bei der Herstellung von Polymeren, beispielsweise mittels einer Polykondensationsreaktion, sind Kondensatoren unerlässlich. Zur Herstellung von beispielsweise Phenoplast, Polyester oder Polyamide müssen die bei der Polykondensation entstehenden Nebenprodukte, wie beispielsweise Wasser, Ammoniak, Alkohole, Chlorwasserstoff usw., kontinuierlich in Kondensatoren abgeführt werden, um das thermodynamische Gleichgewicht zugunsten von Reaktionsprodukten mit einer hohen Molmasse zu verschieben. Die Herstellung von Polymeren kann in einem kontinuierlichen oder diskontinuierlichen Betrieb erfolgen.

Es ist bekannt, dass für die Anwendung von kontinuierlich durchgeführten Reaktionen, wie beispielsweise zur Herstellung von Polymeren, mehrere in Reihe geschaltete liegende oder stehende Reaktoren mit oder ohne eingebauten Rührwerken bzw. Mischorganen einzusetzen. Allen diesen Verfahren ist gemein, dass die Reaktoren mit unterschiedlichen Betriebsbedingungen betrieben werden, die sich im Druck, Vakuum und Temperatur unterscheiden. Der Transport des Produktes zwischen den verschiedenen Reaktoren erfolgt in der Regel durch Pumpen oder durch einen unterschiedlichen Betriebsdruck. Die während der Reaktion aus dem Reaktionsmedium ausgetriebenen Stoffe werden in Kondensatoren niedergeschlagen und anschließend wiederverwendet, gereinigt, entsorgt oder anderweitig genutzt.

Häufig werden für die Kondensation sogenannte Sprühkondensatoren eingesetzt, bei denen die Dämpfe durch eingesprühte Flüssigkeit kondensiert werden. Dabei kann die Flüssigkeit auch die gleiche Zusammensetzung wie das Kondensat aufweisen. In solchen Fällen wird die Flüssigkeit im Kreislauf gefahren und dabei entsprechend den Erfordernissen filtriert und gekühlt, um dann erneut im Kondensator als Kondensationsmittel zur Verfügung zu stehen. Diese Sprühkondensatoren werden häufig eingesetzt, wenn die zu kondensierenden Dämpfe mit Stoffen beladen sind, welche Rohrbündelkondensatoren verunreinigen oder verstopfen könnten.

In Prozessen, die im Unterdruck betrieben werden, wird eine Rohrleitung, mittels welcher die Kreislaufflüssigkeit und das Kondensat aus dem Kondensator abgeführt werden, barometrisch abgetaucht, damit der Sammelbehälter unter Atmosphärendruck betrieben werden kann. Eventuell mitgerissene Feststoffe können dann aus dem barometrisch aufgestellten Sammelbehälter entfernt werden.

Für die barometrische Abtauchung ist jedoch eine Fallhöhe erforderlich, welche dem Vakuum und der Dichte der Flüssigkeit angepasst sein muss. Üblich sind dabei barometrische Rohre mit einer Höhe von etwa 10 m.

Die Patentschrift DD 259 410 A5 beschreibt beispielsweise ein Verfahren und eine Vorrichtung zur Herstellung hochmolekularer Polyester mit einem derartigen barometrischen Kondensator. Der durch die Veresterung von Terephthalsäure und Ethylenglycol im Veresterungsreaktor entstehende Prozessdampf wird sowohl in Dampfstrahlpumpen als auch Mischkondensatoren geleitet. Der dort kondensierte Prozessdampf wird in einem barometrischen Auffangbehälter gesammelt und über eine Pumpe in einen Kühlturm geleitet, in dem das Wasser entgast und gekühlt wird. Eine weitere Pumpe pumpt das so behandelte Prozesswasser in die Mischkondensatoren, in denen es zur Kondensation des Prozessdampfes verwendet wird. Ein Nachteil der beschriebenen Vorrichtung ist, dass durch den Einsatz eines barometrischen Fallrohrs hohe Gebäude notwendig sind, welche die Baukosten und Betriebskosten erhöhen und die Bedienung und Wartung erschweren. Weiterhin nachteilig ist, dass die Pumpen für das Kreislaufwasser eine hohe Förderhöhe überwinden müssen und somit hohe Investitions- und Betriebskosten erfordern. Außerdem ist nachteilig, dass die Flüssigkeit aufgrund der Haltung des Sammelbehälters bei Atmosphärendruck Gase und Wasser aufnimmt, die wiederum unter erneutem Energieeinsatz vor Einleitung in den Kondensator oder im Kondensator entfernt werden müssen und die benötigte Saugleistung der Vakuumeinrichtung vergrößern.

Die Patentschrift DE 199 09 441 C1 beschreibt eine Anlage zum vakuumthermischen Behandeln von Materialien, insbesondere zum Entsorgen von elektrischen Großgeräten, die PCB-haltige Isolierölfüllungen enthalten. Dabei werden die zu entsorgenden Großgeräte über eine Transportkammer in eine beheizbare Behandlungskammer und anschließend in eine weitere kühlbare Behandlungskammer eingeführt. Die Behandlungskammern sind mit einer Zentraleinheit "Z" verbunden, die eine Vakuumpumpeinrichtung, einen Sprühkondensator mit einem Waschflüssigkeitskreislauf zum Waschen der aus der Behandlungskammer austretenden Dämpfe, einen Oberflächenkondensator zum Kondensieren der Dämpfe und eine Reinigungseinrichtung zum Absorbieren der Dämpfe aufweist. Nachteilig an dieser Anlage ist der hohe Anlagenaufwand der in Reihe aufgestellten Wasch- Kondensations- und Filtervorrichtungen.

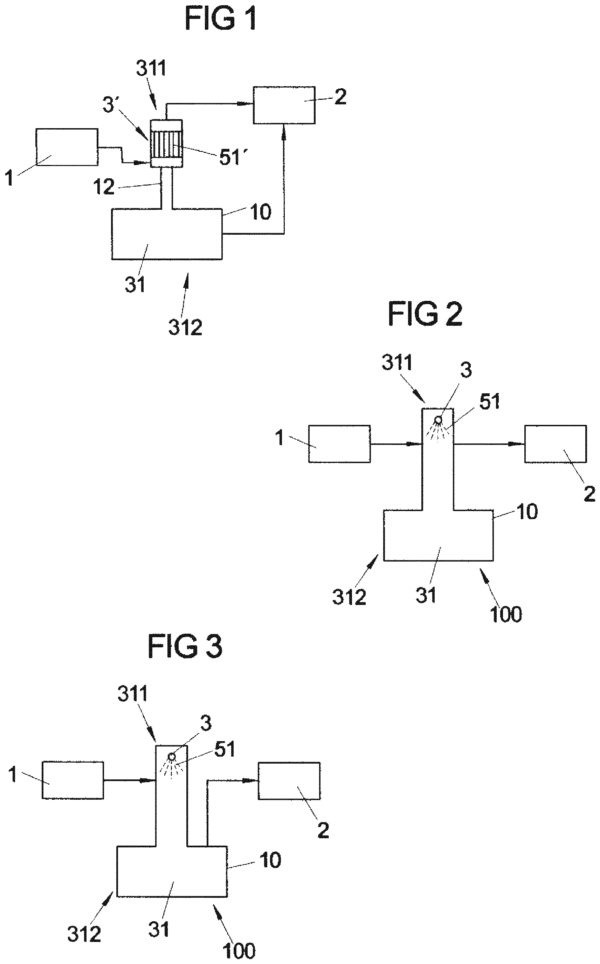

Aus der US 7,732,556 B2 ist ein Verfahren zur Herstellung von Polyestern mittels eines Polykondensationsreaktionsapparates bekannt. Der Polykondensationsreaktionsapparat weist dabei ein oder mehrere Polykondensationsreaktionsbehälter mit einem oder mehreren Auswurfvorrichtungen und einem Kondensator unterhalb der Auswurfvorrichtung auf. Der Dampf aus dem Polykondensationsreaktionsbehälter gelangt über die Auswurfvorrichtung in den Kondensator. Dabei ist der Kondensator über ein barometrisches Fallrohr mit einem Tauchbehälter ("hot well tank") verbunden. Das Kondensat gelangt aus dem Kondensator mittels des barometrischen Fallrohrs in den Tauchbehälter. Die Flüssigkeit des Tauchbehälters wird, wie aus Figur 2 ersichtlich, mittels einer Pumpe in einen Wärmetauscher geleitet und anschließend in den Kondensator als Kondensationsmittel wieder eingeführt. Dabei ist vorgesehen, dass die Flüssigkeit in dem Tauchbehälter und der im Kondensator zu kondensierende Dampf im Wesentlichen aus 1,4-Butandiol bestehen. Nachteilig an diesem Verfahren ist ebenfalls, dass die Gebäudehöhe durch den Einsatz eines barometrischen Fallrohrs vorherbestimmt ist.

WO 2006/099895 A1 betrifft ein Verfahren und eine Vorrichtung zur mehrstufigen Vakuumerzeugung bei der Polyesterherstellung, wobei auch hier ein barometrisches Fallrohr verwendet wird. Auch die in der GB 970,659 offenbarte Vorrichtung zur Kondensation von bei Polykondensationsreaktionen gebildeten Dämpfen umfasst eine barometrische Leitung.

Der Erfindung liegt die Aufgabe zugrunde, ein Verfahren zur Kondensation von Dämpfen unter Vakuum zu schaffen, das sich einfach und ohne großen Anlagenaufwand bewerkstelligen lässt und die Bau- und Betriebskosten verringert.

Diese Aufgabe wird erfindungsgemäß durch ein Verfahren mit den Merkmalen des Anspruchs 1. Ausgestaltungen der Erfindung sind in den Unteransprüchen angegeben.

Danach sieht die erfindungsgemäße Lösung ein Verfahren zur Kondensation von Dämpfen unter Vakuum vor, die mindestens einen räumlichen Kondensationsbereich aufweist, der mit einer Vakuumapparatur zur Erzeugung eines Drucks unterhalb des Atmosphärendrucks verbunden ist und Mittel zur Kühlung aufweist, wobei der räumliche Kondensationsbereich zur Kondensation der Dämpfe einen Druck unterhalb des Atmosphärendrucks aufweist. Weiterhin weist die Vorrichtung mindestens einen räumlichen Sammelbereich für Kondensat und ggf. Feststoffe auf, der mit dem mindestens einen räumlichen Kondensationsbereich verbunden ist.

Das erfindungsgemäße Verfahren ermöglicht die Kondensation von Dämpfen unter Vakuum, wobei die Dämpfe bei der Herstellung von Polyestern mittels einer Polykondensationsreaktion aus Dicarboxylsäuren oder Esterderivate davon und einem Diol anfallen, und wobei in den zu kondensierenden Dämpfe Wasser, Diole und Feststoffe enthalten sind;
wobei das Kondensationsverfahren in einer Vorrichtung zur Kondensation von Dämpfen unter Vakuum durchgeführt wird,
wobei die Vorrichtung mindestens einen räumlichen Kondensationsbereich, der mit einer Vakuumapparatur zur Erzeugung eines Druckes unterhalb des Atmosphärendrucks verbunden ist, mit mindestens einem Sprühkondensator und mindestens einem Kühlmittel zur Kondensation der Dämpfe bei einem Druck unterhalb des Atmosphärendrucks aufweist, wobei die Kondensation über eine in den Sprühkondensator (3) eingeleitete Sprühflüssigkeit als dem Kühlmittel erfolgt;
wobei die Vorrichtung mindestens einem räumlichen Sammelbereich für Kondensat und Feststoffe mit mindestens einem Sammelbehälter aufweist, der mit dem mindestens einen räumlichen Kondensationsbereich verbunden ist,
so dass der Sammelbehälter (31) ebenfalls einen Druck unterhalb des Atmosphärendrucks aufweist;
wobei die Sammlung des Kondensats in dem mindestens einem Sammelbehälter im Sammelbereich erfolgt;
wobei der mindestens eine räumliche Kondensationsbereich und der mindestens eine räumliche Sammelbereich innerhalb eines vakuumdichten Gehäuses mindestens eine Kondensations- und Sammeleinheit ausbilden, wodurch eine barometrische Abtauchung nicht erforderlich ist; und
wobei die mindestens eine Kondensations- und Sammeleinheit bei einem Druck zwischen 0,1 - 100 mbar gehalten wird und wobei die Kondensation des Dampfes in dem mindestens einem Sprühkondensator im Kondensationsbereich mit der Sprühflüssigkeit mit einer Temperatur von 10-80 °C erfolgt.

Die für das Verfahren verwendete Vorrichtung ist dadurch gekennzeichnet, dass der mindestens eine räumliche Sammelbereich und der mindestens eine räumliche Kondensationsbereich innerhalb eines vakuumdichten Gehäuses als mindestens eine Kondensations- und Sammeleinheit ausgebildet sind, die ggf. mit der Vakuumapparatur direkt oder indirekt verbunden ist.

Der Kondensationsbereich und der Sammelbereich sind somit in nur eine einzige Einheit integriert, die sich durch eine kompakte Form auszeichnet.

Durch die Integration des Kondensationsbereichs und des Sammelbereichs in nur einer einzelnen Kondensations- und Sammeleinheit innerhalb eines vakuumdichten Gehäuses wird ebenfalls gewährleistet, dass die zur Kondensation verwendete Flüssigkeit, Sammelflüssigkeit, nicht mit der Atmosphäre in Berührung kommt und damit keinen Sauerstoff und kein Wasser aus der Atmosphäre aufnehmen kann. Der Sammelbereich ist unterhalb, im Bezug auf die Wirkrichtung der Schwerkraft, des Kondensationsbereichs angeordnet.

Dabei kann die Kondensations- und Sammeleinheit in dem Kondensationsbereich zur Kondensation des Dampfes mindestens einen Kondensator und in dem Sammelbereich mindestens einen Sammelbehälter zur Sammlung des im Kondensationsbereich gebildeten Kondensats aufweisen.

Insbesondere kann der Sammelbereich direkt oder indirekt mit einer Vakuumapparatur zur Erzeugung eines Drucks unterhalb des Atmosphärendrucks verbunden sein. Beispielsweise kann eine Druckerniedrigung im Sammelbereich durch eine mit dem Sammelbereich über eine Vakuumleitung direkt verbundene Vakuumapparatur erfolgen. Alternativ kann beispielsweise der Sammelbereich indirekt mit der Vakuumapparatur verbunden sein, wobei dabei der Kondensationsbereich mit der Vakuumapparatur direkt, beispielsweise über eine Vakuumleitung, verbunden ist und durch eine Druckerniedrigung im Kondensationsbereich ebenfalls eine Druckerniedrigung im, mit dem Kondensationsbereich verbundenen, Sammelbereich erfolgt. Weiterhin kann auch vergleichbar den oberen Ausführungen eine indirekte Druckerniedrigung im Kondensationsbereich mittels einer direkt mit dem Sammelbereich verbundenen Vakuumapparatur erfolgen. Alternativ können sowohl der Sammelbereich als auch der Kondensationsbereich direkt über eine Vakuumleitung mit einer Vakuumapparatur zur Erzeugung eines Drucks unterhalb des Atmosphärendrucks verbunden sein.

Hierdurch wird erreicht, dass sowohl der Kondensator als auch der Sammelbehälter einen Druck unterhalb des Atmosphärendrucks aufweisen. Dadurch ist der Einsatz von langen barometrischen Fallrohren unnötig, die aufgrund ihrer Länge dazu ausgelegt sind, dass keine Flüssigkeit aus dem unter Atmosphärendruck liegenden Sammelbehälter über die barometrischen Fallrohre in den unter Unterdruck stehenden Kondensator gelangen kann. Folglich ist die Gesamthöhe des Kondensators und des Sammelbehälters deutlich gegenüber den standardmäßig verwendeten barometrischen Kondensatoren reduziert. Dies ermöglicht einen einfachen und flexiblen Anlagenaufbau und reduziert deutlich die Bau- und Betriebskosten.

Weiterhin wird dadurch eine Verstopfung zwischen dem Kondensationsbereich und dem Sammelbereich durch in den Dämpfen mitgerissene Fremdstoffe, zu der es bei dem Einsatz von barometrischen Fallrohren kommen kann, vermieden. Dadurch wird eine Steigerung der Betriebssicherheit erreicht.

Weiterhin wird dadurch verhindert, dass die zur Kondensation verwendete Flüssigkeit, Sammelflüssigkeit, nicht mit der Atmosphäre in Berührung kommt und damit keinen Sauerstoff und kein Wasser aus der Atmosphäre aufnehmen kann

Entsprechend kann die Kondensations- und Sammeleinheit eine Gesamthöhe von 3 bis 7m, bevorzugt 3 bis 5 m, insbesondere bevorzugt von 4 m aufweisen. Die vorliegende Vorrichtung zeichnet sich somit dadurch aus, dass die Gesamthöhe des Kondensationsbereichs und des Sammelbereichs bzw. der Kondensations- und Sammeleinheit deutlich geringer ist, als bei einer Vorrichtung mit einer barometrischen Abtauchung notwendig ist; eine barometrische Abtauchung wird somit nicht benötigt.

Durch die verringerte Bauhöhe ergibt sich der weitere Vorteil, dass die schweren Prozessapparate, Reaktoren, an welche das Kondensationssystem angeschlossen ist, auf eine geringere Gebäudehöhe oder sogar auf den Fußboden gestellt werden können, wodurch sich die Gebäudekosten wesentlich verringern.

In einer bevorzugten Ausführungsform der vorliegenden Vorrichtung ist der Sammelbereich in Form eines horizontalen Behälters mit einer Ober- und eine Unterseite ausgebildet, wobei der Kondensationsbereich in Form eines vertikalen Apparates auf der Oberseite des Sammelbereiches angeordnet ist. Bei dieser Ausführungsform der vorliegenden Vorrichtung mündet der vertikale Kondensationsbereich mit einem offenen Ende unmittelbar in den horizontalen Sammelbereich und zwar auf dessen Oberseite, der an dieser Stelle entsprechend eine Öffnung aufweist, wobei die Abmaße der Öffnung auf der Oberseite des Sammelbereiches mit den Abmaßen des offenen Endes des vertikalen Kondensationsbereiches korrespondieren und bevorzugt gleich sind.

Die Grenzfläche zwischen Kondensations- und Sammelbereich ist bevorzugterweise offen gestaltet, so dass zwischen Kondensations- und Sammelbereich keine weiteren Elemente oder Vorrichtungen wie z.B. Filtervorrichtungen, Anschlüsse, Schließungen, Abdeckungen etc. vorhanden sind.

Der Kondensationsbereich kann an beliebiger Stelle auf der Oberseite des horizontalen Sammelbereiches angeordnet sein.

Es ist auch bevorzugt, wenn der Sammelbereich und der Kondensationsbereich einstückig ausgebildet sind. So kann der Kondensationsbereich in Form eines Domes ausgebildet sein, der auf der Oberseite des horizontalen Sammelbereiches angeordnet ist.

Eine Erzeugung eines Drucks unterhalb des Atmosphärendrucks erfolgt dabei mittels einer Vakuumapparatur, die wenigstens eine Vakuumpumpe zur Erzeugung eines Drucks unterhalb des Atmosphärendrucks aufweist. Alternativ kann die Vakuumapparatur auch mehrere Vakuumpumpen aufweist, die gemeinsam oder getrennt betrieben werden können. Beispielsweise kann die Vakuumapparatur zwei Vakuumpumpen aufweisen, die beide zur Erzeugung eines Drucks unterhalb des Atmosphärendrucks innerhalb des Kondensationsbereichs eingesetzt werden können. Alternativ kann die Vakuumapparatur zwei Vakuumpumpen aufweisen, die getrennt voneinander betrieben werden können und die jeweils getrennt zur Erzeugung eines Drucks unterhalb des Atmosphärendrucks innerhalb des Kondensationsbereichs beziehungsweise innerhalb des Sammelbereichs eingesetzt werden können.

Dabei kann die Vorrichtung insbesondere dazu vorgesehen und ausgebildet sein, die bei der Herstellung von Polymeren entstehenden Dämpfe zu kondensieren und ggf. einschließlich etwa anhängender Feststoffe zu sammeln. Eine derartige Vorrichtung und ein derartiges Verfahren findet insbesondere bei der Herstellung von Polymeren mittels einer Polykondensationsreaktion Anwendung. Im Allgemeinen werden Polyester mittels einer Polykondensationsreaktion unter Unterdruck hergestellt. Dabei werden Dicarboxylsäuren oder Esterderivate davon mit einem Diol zur Reaktion gebracht.

Als Ausgangsmaterialien eignen sich beispielsweise Terephthalsäure und 1,4-Butandiol, Bisphenol A (2,2-Bis-(4-hydroxyphenyl)-propan) und Phosgen (Carbonylchlorid), Terephthalsäure und Ethylenglycol sowie 2,6-Naphthalendicarbonsäuredimethylester und Ethylenglycol. Weitere verwendbare Diole wären Diethylenglycol, Triethylenglycol, 1,2-Propylenglycol, Dipropylenglycol, 1,6-Hexandiol, 1,3-Butandiol oder Neopentylglycol. Als Carbonsäuren können weiterhin auch Phthalsäure, Oxalsäure, Isophthalsäure, Bernsteinsäure, Adipinsäure, Sebacinsäure oder Glutarsäure verwendet werden. Auch ε-Caprolacton oder Methyl-ε-caprolacton sind als Ausgangsmaterial für Ringöffnungspolymerisationen mit Diolen denkbar. Weiterhin sind auch Triole wie Trimethylolpropan, Trimethylolethan oder Glycerin verwendbar.

Die Verwendung dieser Ausgangsmaterialien zur Herstellung eines Polyesters ist lediglich beispielhaft. Je nach Anforderung hinsichtlich der Eigenschaften des Polyesters können verschiedene Ausgangsmaterialien verwendet und miteinander kombiniert werden. Dabei wird beispielhaft auf die in der US 7,732,556 - im Abschnitt 4, Zeile 36 bis 67 und Abschnitt 5, Zeile 1 bis 30 - genannten Ausgangsmaterialien verwiesen.

In einer Ausführungsform weist der Kondensator Mittel zur Kühlung in Form eines Oberflächenkondensators, wie beispielsweise eines Rohrbündelkondensators, auf. Dabei werden Oberflächenbereiche des Kondensators durch einen Kühlmittelkreislauf auf eine vorbestimmte Temperatur gekühlt. Der Dampf kondensiert bei einem angelegten Druck unterhalb des Atmosphärendrucks an diesen, im Kondensationsbereich liegenden, gekühlten Oberflächen und gelangt somit mithilfe der Schwerkraft in den Sammelbereich. Dabei ist der Kühlmittelkreislauf von dem Kondensat räumlich getrennt.

In einer weiteren Ausführungsform erfolgt die Kondensation bei einem angelegten Druck unterhalb des Atmosphärendrucks mittels eines Sprühkondensators. Dabei wird eine Flüssigkeit, die eine Temperatur unterhalb der Siedetemperatur der Flüssigkeit bei dem angelegten Druck unterhalb des Atmosphärendrucks aufweist, insbesondere in einem Temperaturbereich zwischen 10 °C und 80 °C in den Sprühkondensator eingesprüht. Die eingesprühte Flüssigkeit bildet Kondensationskeime zur Kondensation des Dampfes innerhalb des Kondensationsbereiches. Die Sprühflüssigkeit und das Kondensat gelangen mithilfe der Schwerkraft in den Sammelbereich und werden dort gemeinsam gesammelt.

In einer weiteren Ausführungsform ist die Sammelflüssigkeit aus dem Sammelbereich mittels einer Pumpe über eine Leitung in den Kondensationsbereich bringbar. Die so in den Kondensationsbereich gebrachte Sammelflüssigkeit kann beispielsweise bei einem Sprühkondensator zur erneuten Kondensationskeimbildung eingesprüht werden. Dadurch wird ein geschlossener Kühlkreislauf mittels der Sammelflüssigkeit, bestehend aus dem Kondensat und der Sprühflüssigkeit, erreicht. Dies ermöglicht beispielsweise, dass nur eine bestimmte Menge an Sprühflüssigkeit durch beispielsweise toxische Dämpfe im Kondensator kontaminiert wird. Folglich wird die Menge der eventuell zu entsorgenden Sammelflüssigkeit begrenzt.

Durch die erfindungsgemäße Lösung ist es weiterhin möglich, dass die Pumpen zur Zirkulation der Sammelflüssigkeit nur eine geringe Förderhöhe überwinden müssen. Dadurch wird eine Senkung der Investitions- und Betriebskosten erreicht.

Weiterhin zeichnet sich die erfindungsgemäße Lösung dadurch aus, dass für die Flüssigkeit im Sammelbehälter, durch die Unterbringung in dem vakuumdichten Gehäuse, keine Möglichkeit mehr gegeben ist, Gase oder Luftfeuchtigkeit aus der Atmosphäre aufzunehmen. Der im Vakuum arbeitende Flüssigkeitskreislauf der Sammelflüssigkeit bleibt somit frei von der Aufnahme zusätzlicher Stoffen. Derartig aufgenommene Stoffe müssten dann später entweder in einer separaten Entgasungsvorrichtung oder im Kondensationsbereich eines Kondensators durch zusätzliche Energieaufwendung entfernt werden. Die erfindungsgemäße Lösung benötigt deshalb Vakuumerzeuger mit geringerer Leistung, dadurch wird eine Energie- und Kosteneinsparung erzielt.

In einer Ausführungsform weist der Sammelbereich eine vorgegebene Menge an Sammelflüssigkeit auf. Dies ermöglicht einen reibungslosen Ablauf der Flüssigkeitszirkulation von dem Sammelbereich mittels der Pumpe in den Kondensationsbereich. Dabei kann vorgesehen sein, dass die Zusammensetzung der kondensierten Sammelflüssigkeit im Wesentlichen der Gleichgewichtszusammensetzung des zu kondensierenden Dampfes entspricht. Dabei bedeutet im Wesentlichen, dass der zu kondensierende Dampf und die Sammelflüssigkeit sich lediglich durch das Vorhandensein von Verunreinigungen oder Nebenprodukte, die bei chemischen Reaktionen entstehen (wie beispielsweise Wasser, Alkohole oder THF) in unterschiedlichen Konzentrationen unterscheiden. Dadurch wird ein einfaches Recyceln der Sammelflüssigkeit gewährleistet und die Menge der eventuell zu entsorgenden Flüssigkeit bzw. die Abwassermenge deutlich reduziert.

Weiterhin kann eine Kühlvorrichtung zur Kühlung der Sammelflüssigkeit vorgesehen sein. Eine derartige Kühlvorrichtung kann direkt an dem Sammelbereich angebracht sein oder innerhalb des Flüssigkeitskreislaufes von dem Sammelbereich in den Kondensationsbereich angeordnet sein. Auch mehrere Kühlvorrichtungen sind denkbar. Dabei kann eine Kühlung der Flüssigkeit auf eine Temperatur unterhalb des Siedepunkts der Flüssigkeit, insbesondere in einem Bereich von 10 °C bis 80 °C erfolgen.

In einem Ausführungsbeispiel ist eine Filtereinrichtung innerhalb der Leitung zur Abtrennung von Fremdstoffen vorgesehen. Dadurch wird gewährleistet, dass beispielsweise Feststoffe, die mit dem Dampf in den Kondensationsbereich mitgerissen worden sind und somit in den Sammelbereich gelangen, aus dem Flüssigkeitskreislauf entfernt werden können. Eine derartige Beladung der Dämpfe mit Feststoffen ist häufig bei der Herstellung von Polymeren, wie beispielsweise bei Polykondensationsreaktionen, zu beobachten.

Weiterhin kann mindestens ein Beruhigungs- und Abscheidungsbereich zur Absetzung von Fremdstoffen im Sammelbereich vorgesehen sein. Dadurch wird gewährleistet, dass Fremdstoffe, die durch den Dampf in den Kondensator eingeführt worden sind, sich im Sammelbereich absetzten können. Dabei bedeutet Absetzung, dass sich Fremdstoffe, die eine höhere Dichte als die Sammelflüssigkeit aufweisen, sich im unteren Abschnitt des Sammelbereichs absetzten und Fremdstoffe, die eine niedrigere Dichte als die Sammelflüssigkeit aufweisen, sich im oberen Abschnitt der Sammelflüssigkeit absetzten.

Alternativ oder zusätzlich kann eine Abscheidungsvorrichtung zur Abscheidung von Fremdstoffen an dem Sammelbereich vorgesehen sein. Dadurch wird gewährleistet, dass beispielsweise Feststoffe, die durch den Dampf in den Kondensator eingeführt worden sind, erfolgreich aus dem Sammelbehälter entfernt werden können. Dies kann beispielsweise durch ein geeignetes Schleusensystem erfolgen, das derart ausgebildet ist, dass das Vakuum nicht gestört wird. Folglich wird vermieden, dass die Feststoffe in den Flüssigkeitskreislauf gelangen können und beispielsweise die Pumpe oder eine eventuelle Kühlvorrichtung beschädigen. Weiterhin wird somit auch vermieden, dass die mitgerissenen Feststoffe die Düsen eines eventuell verwendeten Sprühkondensators verstopfen können.

Weiterhin kann ein Fremdstoffsammelbehälter vorgesehen sein zur Sammlung von beispielsweise mitgerissenem Feststoff, der sich im Sammelbereich ablagert. Dadurch wird eine einfache Entsorgung oder ein einfaches Wiederverwerten der gesammelten Fremdstoffe ermöglicht.

In einer weiteren Ausführungsform ist eine Ausschleusungsvorrichtung zur Ausschleusung von Teilen der Sammelflüssigkeit vorgesehen. Da bei einem geschlossenen Flüssigkeitskreislaufsystem die Menge der Flüssigkeit durch die Zuführung des zu kondensierenden Dampfes stetig zunimmt, wird durch die Ausschleusungsvorrichtung gewährleistet, dass die Menge der Flüssigkeit im Flüssigkeitskreislauf auf ein gewünschtes Niveau beschränkt werden kann.

In einer Ausgestaltungsform weist der Kondensationsbereich und der Sammelbereich bzw. die Kondensations- und Sammeleinheit einen Druck zwischen 0,1 bis 100 mbar auf.

Das erfindungsgemäße Verfahren zur Kondensation von Dämpfen unter Vakuum ist durchführbar in einer oben beschriebenen Vorrichtung mit mindestens einer Kondensations- und Sammeleinheit, wobei die mindestens eine Kondensations- und Sammeleinheit bei einem Druck unterhalb des Atmosphärendrucks gehalten wird und wobei die Kondensation des Dampfes in dem mindestens einem Kondensationsbereich und die Sammlung des Kondensats in dem mindestens einem Sammelbereich erfolgt.

. Insbesondere wird der Druck im Kondensationsbereich und im Sammelbereich mittels einer an dem Sammelbereich angeordneten Vakuumapparatur auf einen Druck unterhalb des Atmosphärendrucks gehalten.

In einem Ausführungsbeispiel umfasst die Kondensations- und Sammeleinheit ein vakuumdichtes Gehäuse.

In einer weiteren Ausführungsform wird die Sammelflüssigkeit mittels einer Pumpe über eine Leitung in den Kondensationsbereich gebracht. Dabei kann es vorgesehen sein, dass das Kondensat sich mit einer im Sammelbereich vorgegebenen Menge an Sammelflüssigkeit mischt. Insbesondere kann vorgesehen sein, dass die Zusammensetzung der kondensierten Sammelflüssigkeit im Wesentlichen der Gleichgewichtszusammensetzung des Dampfes entspricht.

Weiterhin kann vorgesehen sein, dass die Sammelflüssigkeit mittels einer Kühlvorrichtung gekühlt wird, wobei die Flüssigkeit auf eine Temperatur unterhalb der Siedetemperatur der Flüssigkeit bei dem angelegten Druck unterhalb des Atmosphärendrucks, insbesondere auf eine Temperatur zwischen 10 °C bis 80 °C gekühlt wird.

In einer alternativen Ausführungsform kann vorgesehen sein, dass Fremdstoffe mittels einer Filtereinrichtung innerhalb der Leitung abgetrennt werden.

Weiterhin kann vorgesehen sein, dass Fremdstoffe sich innerhalb eines Beruhigungs- und Abscheidungsbereichs absetzen können und alternativ oder zusätzlich über eine an dem Sammelbereich angeordnete Ausscheidungsvorrichtung abgeschieden bzw. ausgeschieden werden können. Die abgeschiedenen Fremdstoffe können dabei in einem Fremdstoffsammelbehälter gesammelt werden. Weiterhin können Teile der Sammelflüssigkeit über eine Ausschleusungsvorrichtung ausgeschleust werden.

In einer weiteren Ausführungsform liegt der Druck innerhalb des Kondensations- und Sammelbereichs oder innerhalb der Kondensations- und Sammeleinheit zwischen 0,1 bis 100 mbar und die Gesamthöhe des Kondensations- und Sammelbereichs oder der Kondensations- und Sammeleinheit liegt deutlich unterhalb der Gesamthöhe, wie sie bei einer barometrischen Abtauchung notwendig wäre. Insbesondere liegt die Gesamthöhe bei 3 bis 7 Meter, bevorzugt bei 3 bis 5 m, insbesondere bevorzugt bei 4 m.

Die Erfindung wird im Folgenden anhand von Ausführungsbeispielen unter Bezugnahme auf die Figuren näher erläutert. Es zeigen:
- Figur 1: ein erstes nicht erfindungsgemäße Ausführungsbeispiel einer Vorrichtung zur Kondensation von Dämpfen unter Vakuum, die einen Oberflächenkondensator und einen Sammelbehälter aufweist, die beide mit einer Vakuumapparatur verbunden sind;
- Figur 2: ein weiteres Ausführungsbeispiel, wobei ein Sprühkondensator innerhalb eines Kondensationsbereichs und ein Sammelbereich in eine Kondensations- und Sammeleinheit integriert sind und der Kondensationsbereich mit einer Vakuumapparatur verbunden ist;
- Figur 3: ein weiteres Ausführungsbeispiel einer Vorrichtung gemäß Figur 2, wobei der Sammelbereich mit einer Vakuumapparatur verbunden ist;
- Figur 4: ein weiteres Ausführungsbeispiel einer Vorrichtung gemäß Figur 2 mit einem integrierten Kreislauf einer Sammelflüssigkeit, welche in den Sprühkondensator zurückgeführt wird;
- Figur 5: ein weiteres Ausführungsbeispiel einer Vorrichtung gemäß Figur 4, wobei der Kondensationsbereich und der Sammelbereich mittels eines Verbindungsstücks miteinander verbunden sind;
- Figur 6: ein weiteres Ausführungsbeispiel einer Vorrichtung gemäß Figur 4, wobei der Kondensationsbereich einen Sprühkondensator und einen Rohrbündelkondensator aufweist;
- Figur 7: ein weiteres Ausführungsbeispiel einer Vorrichtung gemäß Figur 4, wobei der Sammelbereich zusätzlich eine Abscheidungsvorrichtung für Fremdstoffe aufweist;
- Figur 8: ein weiteres Ausführungsbeispiel einer Vorrichtung gemäß Figur 4, wobei eine Kühlvorrichtung an dem Sammelbereich angeordnet ist.

Die Figur 1 zeigt ein allgemeines Beispiel einer Vorrichtung zur Kondensation von Dämpfen unter Vakuum. Die zu kondensierenden Dämpfe werden in einen im Kondensationsbereich 311 angeordneten Kondensator 3, hier ein Rohrbündelkondensator 3', geleitet, der mit einer Vakuumapparatur 2 verbunden ist. Die Verwendung eines Rohrbündelkondensators 3' ist lediglich beispielhaft und jegliche Art eines Oberflächenkondensators, Sprühkondensators oder Mischkondensators kann verwendet werden.

Die Oberfläche des Rohrbündelkondensators 3' wird mit Kühlrohren 51' gekühlt. Dadurch wird eine Kondensation der Dämpfe an der kühleren Oberfläche der Kühlrohre 51' des Rohrbündelkondensators 3', die über einen geschlossenen Kühlkreislauf gekühlt werden (hier nicht gezeigt), erreicht. Der Rohrbündelkondensator 3' ist über ein Verbindungsstück 12, beispielsweise eine Rohrleitung, mit einem in einem Sammelbereich 312 angeordneten Sammelbehälter 31 vakuumdicht verbunden. Der Sammelbehälter 31 ist weiterhin mit der Vakuumapparatur 2 verbunden. Der Einsatz zweier Vakuumapparaturen für jeweils einen Rohrbündelkondensator 3' und einen Sammelbehälter 31 ist ebenfalls möglich.

Eine derartige Vorrichtung zur Kondensation von Dämpfen unter Vakuum ermöglicht insbesondere die Kondensation von toxischen oder umweltgiftigen Dämpfen innerhalb eines Rohrbündelkondensators 3' mit geschlossenem Kühlmittelkreislauf innerhalb der Kühlrohren 51'. Durch die Trennung des Kondensats von dem Kühlmittelkreislauf wird die Menge der zu entsorgenden Sammelflüssigkeit deutlich reduziert.

Die Figur 2 und 3 zeigen Ausführungsbeispiele einer erfindungsgemäßen Vorrichtung zur Kondensation von Dämpfen unter Vakuum. Hierbei ist ein Sprühkondensator 3 und der Sammelbehälter 31 innerhalb eines vakuumdichten Gehäuses 10 als eine Kondensations- und Sammeleinheit 100 ausgebildet. Dabei weist die Kondensations- und Sammeleinheit 100 einen Kondensationsbereich 311 zur Kondensation des Dampfes und einen Sammelbereich 312 zur Sammlung des im Kondensationsbereich 311 gebildeten Kondensats auf. Der Sammelbereich 312 ist unterhalb, im Bezug auf die Wirkrichtung der Schwerkraft, des Kondensationsbereichs 311 angeordnet.

Die Dämpfe werden zur Kondensation in den Kondensationsbereich 311 eingeleitet, wobei der Kondensationsbereich 311 einen Sprühkondensator 3 aufweist, der mit der Vakuumapparatur 2 verbunden ist (Figur 2) und einen Druck unterhalb des Atmosphärendrucks aufweist. Alternativ kann auch der Sammelbereich 312 mit der Vakuumapparatur 2 verbunden sein (Figur 3). Die Kondensation erfolgt dabei über eine, in den Sprühkondensator 3 eingeleitete, Sprühflüssigkeit 51 als Kühlmittel. Die Sprühflüssigkeit 51 weist dabei eine vorherbestimmte Temperatur, die unterhalb der Siedetemperatur der Flüssigkeit bei dem angelegten Druck unterhalb des Atmosphärendrucks liegt, insbesondere in einem Temperaturbereich von 10 °C bis 80 °C, auf. Die in den Sprühkondensator 3 eingeführte Sprühflüssigkeit 51 bildet folglich Kondensationskeime zur Kondensation der Dämpfe innerhalb des Kondensationsbereichs 311.

Dabei wird die Sprühflüssigkeit 51 mit dem Kondensat vermischt und gelangt mithilfe der Schwerkraft in den unterhalb des Kondensationsbereichs 311 angeordneten Sammelbereich 312. Der Sammelbereich 312 ist mit der Vakuumapparatur 2 verbunden und weist folglich denselben Druck unterhalb des Atmosphärendrucks auf, wie der darüberliegende Kondensationsbereich 311. Dadurch, dass zwischen dem Kondensationsbereich 311 und dem Sammelbereich 312 keine Druckdifferenz vorliegt, ist die Verwendung eines äußerst langen barometrischen Fallrohres, um ein Zurücksaugen der Sammelflüssigkeit aus einem unter Atmosphärendruck stehenden Sammelbehälter beziehungsweise Tauchbehälter zu verhindern, nicht mehr nötig. Folglich fällt die Gesamthöhe der Kondensations- und Sammeleinheit 100 deutlich geringer aus, als in den standardmäßigen verwendeten barometrischen Kondensatoren. Insbesondere beträgt die Gesamthöhe 3 bis 7 Meter.

Eine derartige Vorrichtung eignet sich insbesondere zur Behandlung pflanzlicher und tierischer Öle und Fette, zum Beispiel bei der physikalischen Raffination, bei der Desodorierung und bei der destillativen Fraktionierung von Fettsäuren bei denen niedrige absolute Drücke zwischen 0,1 und etwa 60 mbar angewendet werden. Im Gegensatz zu den bekannten Verfahren und Vorrichtungen bei denen das Kondensat aus dem Kondensator über ein barometrisches Fallrohr in einen offenen Fallwasserkasten gebracht wird, stellt das erfindungsgemäße Verfahren und die erfindungsgemäße Vorrichtung lediglich geringe Anforderungen an die Gesamthöhe der Anlage.

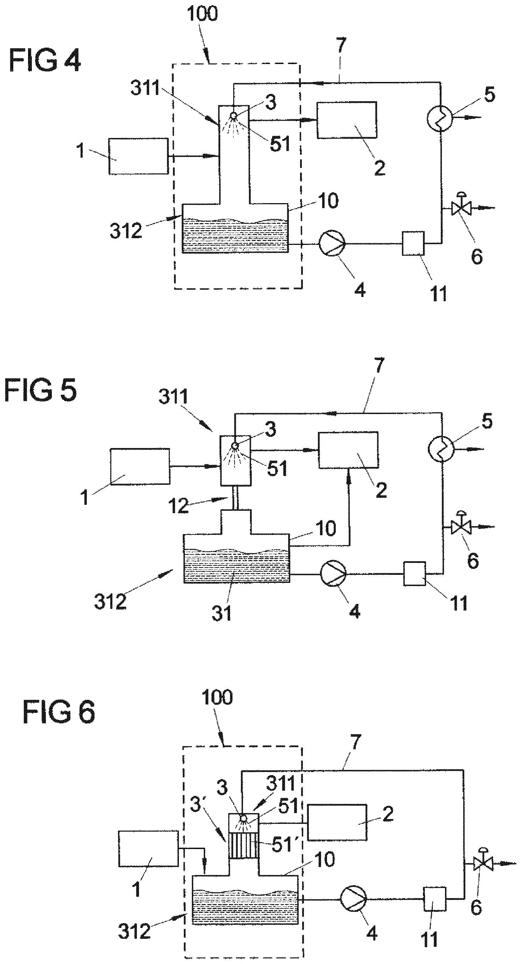

Die Figur 4 zeigt ein weiteres Ausführungsbeispiel zur Kondensation von Dämpfen unter Vakuum. Die Dämpfe werden aus einer Prozessapparatur 1 in die Kondensations- und Sammeleinheit 100 eingeleitet.

Unter einer Prozessapparatur sind jegliche Apparaturen und Anlagen zu verstehen, bei denen während eines industriellen Herstellungsprozesses Dämpfe entstehen, welche anschließend innerhalb eines Kondensationsbereichs kondensiert werden. Dies trifft beispielsweise auf Zuckerraffinerien, petrochemische Raffinerien, industrielle Anlagen zur Nahrungsmittelherstellung oder einer Vielzahl von chemischen Produktionsprozessen zu. Insbesondere bei der Herstellung von Polymeren ist es nahezu unerlässlich, generierte Dämpfe aus dem Reaktionsgemisch zu entfernen und zu kondensieren. Dies trifft besonders bei Polykondensationsverfahren zur Herstellung von Polyestern oder Polyamiden zu.

Der in der Prozessapparatur 1, beispielsweise ein Polykondensationsreaktor, entstehende Prozessdampf wird in die Kondensations- und Sammeleinheit 100 eingeleitet, die mit einer Vakuumapparatur 2 verbunden ist und bei einem Druck unterhalb des Atmosphärendrucks gehalten wird. Die Kondensation des Prozessdampfes erfolgt in dem Kondensationsbereich 311 mittels eines Sprühkondensators 3. Dabei dient die eingesprühte Sprühflüssigkeit 51 als Mittel zur Kühlung. Die Sprühflüssigkeit 51 wird mit einer geeigneten Temperatur, die unterhalb der Siedetemperatur der Sprühflüssigkeit 51 bei dem angelegten Druck unterhalb des Atmosphärendrucks liegt, insbesondere in einem Temperaturbereich von 10-80°C in den Sprühkondensator 3 eingesprüht. Dabei wirkt die, im Vergleich zu dem Prozessdampf, deutlich kühlere Sprühflüssigkeit 51 als Kondensationskeim zur Kondensation des Dampfes.

Die Sprühflüssigkeit und das Kondensat gelangen mithilfe der Schwerkraft in den Sammelbereich 312. Die Kondensations- und Sammeleinheit 100 ist dabei mit der Vakuumapparatur 2 verbunden. Die Kondensation erfolgt somit bei einem Druck unterhalb des Atmosphärendrucks. Der Kondensationsbereich 311 und der Sammelbereich 312 sind innerhalb eines vakuumdichten Gehäuses 10 in der Kondensations- und Sammeleinheit 100 integriert. Dabei ist der Sammelbereich 312 unterhalb, in Bezug auf die Wirkrichtung der Schwerkraft, des Kondensationsbereichs 311, angeordnet.

Bei einem Anlegen eines Unterdrucks in der Kondensations- und Sammeleinheit 100 mittels der Vakuumapparatur 2 wird somit erreicht, dass der Unterdruck im Kondensationsbereich 311 dem Unterdruck in dem Sammelbereich 312 entspricht. Es liegt folglich kein Druckunterschied zwischen dem Kondensationsbereich 311 und dem Sammelbereich 312 vor. Dadurch wird der Einsatz von langen barometrischen Fallrohren vermieden, die aufgrund ihrer Länge dazu ausgelegt sind, dass keine Flüssigkeit aus einem Sammelbehälter aufgrund des Druckunterschieds in den Kondensator gelangen kann. Folglich ist die Höhe der Kondensations- und Sammeleinheit 100 signifikant geringer als bei standardmäßig verwendeten barometrischen Kondensatoren. Die Ansprüche an die Gebäudehöhe beim Bau von verfahrenstechnischen Anlagen sind somit deutlich geringer. Dies ermöglicht signifikante Einsparung bei den Baukosten und den Betriebskosten sowie eine Erleichterung der Bedienung und Wartung. Durch die geringen Anforderungen an die Gebäudehöhe wird eine größere Freizügigkeit in der Gestaltung der Anlagenauslegung und der Wahl des Bauplatzes ermöglicht.

Die Sprühflüssigkeit 51 und das Kondensat werden in dem Sammelbereich 312 gesammelt und vereinigen sich dort zu einer Sammelflüssigkeit. Die Sammelflüssigkeit wird aus dem Sammelbereich 312 über eine Leitung 7 mittels einer Pumpe 4 in den Kondensationsbereich 311 gebracht und steht somit als Sprühflüssigkeit 51 zu einer erneuten Kondensationskeimbildung zur Verfügung.

Die Sammelflüssigkeit wird dabei mittels eine Kühlvorrichtung 5 eine gewünschte Temperatur gebracht. Dadurch wird ein geschlossener Kühlkreislauf mittels der Sammelflüssigkeit, bestehend aus dem Kondensat und der Sprühflüssigkeit, gebildet. Aufgrund der geringen Anforderungen an die Höhe der Kondensations- und Sammeleinheit 100 muss die Pumpe 4 zur Zirkulation der Sammelflüssigkeit nur eine vergleichsweise geringe Förderhöhe überwinden. Dies führt zu einer Senkung der Investitions- und Betriebskosten der Pumpe 4.

Durch die Unterbringung der Sammelflüssigkeit in einem Sammelbereich 312, der einen Druck unterhalb des Atmosphärendrucks aufweist, wird erreicht, dass die Sammelflüssigkeit keine Gase oder Luftfeuchtigkeit aus der Atmosphäre aufnehmen kann. Durch den im Vakuum arbeitenden Flüssigkeitskreislauf müssen folglich keine aus der Atmosphäre aufgenommenen Stoffe in einer separaten Entgasungsvorrichtung oder im Kondensationsbereich 311 durch zusätzliche Energieaufwendungen entfernt werden. Dies ermöglicht den Einsatz weniger oder kleiner dimensionierter Vakuumaggregate zur Betreibung der Kondensations- und Sammeleinheit 100. Dies ermöglicht folglich eine Energie- und Kosteneinsparung.

Der Sammelbereich 312 weist eine vorgegebene Menge an Sammelflüssigkeit auf, wobei die Zusammensetzung der Sammelflüssigkeit im Wesentlichen der Gleichgewichtszusammensetzung des zu kondensierenden Dampfes entspricht.

Ein derartiges Verfahren findet insbesondere bei der Herstellung von Polymeren mittels einer Polykondensationsreaktion, wie beispielsweise Polyesterreaktionen, Anwendung. Im Allgemeinen werden Polyester mittels einer Reaktion zwischen einer Dicarboxylsäure oder Esterderivaten davon und einem Diol in einer Polykondensationsreaktion unter Unterdruck hergestellt, wobei das entstehende Wasser und niedermolekulare Materialien, wie Diole, aus dem System entfernt werden. Eine Entfernung der oben erwähnten Nebenprodukte erfolgt dabei über den Dampf eines der Ausgangsmaterialien aus der Prozessapparatur 1 in den Sprühkondensator 3.

Als Sprühflüssigkeit 51 wird dabei dasselbe Ausgangsmaterial verwendet. Demzufolge entspricht die Zusammensetzung der Sammelflüssigkeit der Gleichgewichtszusammensetzung des zu kondensierenden Dampfes, wobei sie sich lediglich durch Verunreinigung, wie beispielsweise bei der chemischen Reaktion entstehenden Nebenprodukten (Wasser, niedermolekulare Diole), unterscheiden. Dadurch wird ein leichtes Recyceln der Sammelflüssigkeit gewährleistet und die Menge der eventuell zu entsorgenden Flüssigkeit deutlich reduziert.

Dabei können auch Teile der Sammelflüssigkeit über eine hier nicht dargestellte Leitung direkt in die Prozessapparatur zu einer Weiterreaktion eingeleitet werden. Eine eventuell erforderliche Aufreinigung kann dabei (hier nicht gezeigt) durch eine beispielsweise fraktionierte Destillation vor einem Einbringen in die Prozessapparatur 1 erfolgen.

Die Sammelflüssigkeit kann beispielsweise bei einer Herstellung von Polybutylenterephthalat, aus den Ausgangsmaterialien Terephthalsäure und 1,4-Butandiol, aus 1,4-Butandiol bestehen. Dabei wird der aus hauptsächlich 1,4-Butandiol bestehende Dampf aus der Prozessapparatur 1 in die Kondensations- und Sammeleinheit 100 geleitet und dabei in dem Kondensationsbereich 311 mittels des durch den Sprühkondensator 3 eingesprühten Sprühmittels 51, bestehend aus 1,4-Butandiol, kondensiert.

Die Verwendung dieser Ausgangsmaterialien zur Herstellung eines Polyesters ist lediglich beispielhaft. Je nach Anforderung hinsichtlich der Eigenschaften des Polyesters können verschiedene Ausgangsmaterialien verwendet werden. Dabei wird beispielhaft auf die in der Beschreibung genannten Ausgangsmaterialien verwiesen. Auch ist eine Beschränkung auf Polyester nicht zwingend, es können ebenfalls Ausgangsmaterialien zur Herstellung von Polyamiden oder anderer Polymere, wie bereits beschrieben, verwendet werden.

Weiterhin ist innerhalb des Flüssigkeitskreislaufes eine Filtereinrichtung 11 zur Abtrennung von Fremdstoffen angeordnet. Eine derartige Filtereinrichtung 11 kann vom Fachmann je nach Bedarf gewählt werden und kann beispielsweise aus einem Absorptionsfilter zur Entfernung ungewollter Flüssigkeiten bestehen oder aus einem mechanischen Filter mit einer vorgegebenen Porengröße zur Entfernung von Feststoffen. Die Abführung von abgeschiedenen Feststoffen aus dem Flüssigkeitskreislauf kann beispielsweise auch mittels einer Filtereinrichtung 11 auf der Druckseite der Umlaufpumpe 4 erfolgen.

Weiterhin ist eine Ausschleusungsvorrichtung 6 zur Ausschleusung von Teilen der Sammelflüssigkeit vorgesehen. Dadurch ist es möglich, die Menge der Flüssigkeit des geschlossenen Flüssigkeitskreislaufsystems, trotz der stetigen Zuführung von zu kondensierendem Dampf, auf ein gewünschtes Niveau zu beschränken. Dabei kann vorgesehen sein, dass die Sammelflüssigkeit aus der Ausschleusungsvorrichtung 6, wie bereits beschrieben, in die Prozessapparatur 1 wieder eingeführt werden kann.

Die Kondensations- und Sammeleinheit 100 weist einen Druck zwischen 0,1 bis 100mbar auf und kann eine Gesamthöhe von 3 bis 7 Meter, insbesondere eine Gesamthöhe von 3 Metern, aufweisen.

Die Figur 5 zeigt ein weiteres Ausführungsbeispiel einer Vorrichtung und eines Verfahrens zur Kondensation von Dämpfen unter Vakuum. Dabei wird Dampf aus der Prozessapparatur 1 in den Kondensationsbereich 311, der über die Vakuumapparatur 2 bei einem Druck unterhalb des Atmosphärendrucks, insbesondere bei einem Druck zwischen 0,1 bis 100 mbar, gehalten wird, eingeführt. Die Kondensation des Dampfes erfolgt innerhalb des Sprühkondensators 3 mittels der eingesprühten Sprühflüssigkeit 51. Hinsichtlich weiterer Erläuterungen wird auf das Ausführungsbeispiel der Figur 4 verwiesen.

Das Kondensat und die Sprühflüssigkeit 51 gelangen über ein vakuumdichtes Verbindungsstück 12, beispielsweise eine Rohrleitung, mittels der Schwerkraft in den darunter liegenden Sammelbehälter 31. Der Sammelbehälter 31 ist ebenfalls mit der Vakuumapparatur 2 verbunden und wird ebenfalls bei einem Druck unterhalb des Atmosphärendrucks gehalten. Die Sammelflüssigkeit wird über eine Leitung 7 mittels einer Pumpe 4 als Sprühflüssigkeit 51 wieder in den Sprühkondensator 3 eingeleitet.

Die Kreislaufflüssigkeit durchläuft dabei eine Filtervorrichtung 11 und wird mittels einer Kühlvorrichtung 5 auf eine gewünschte Temperatur insbesondere auf eine Temperatur zwischen 10 °C und 80 °C, gebracht, bevor sie in den Sprühkondensator 3 eingeleitet wird. Dabei ist es vorgesehen, dass gegebenenfalls das Flüssigkeitsniveau der Sammelflüssigkeit mittels der Ausschleusungsvorrichtung 6 geregelt werden kann. Hinsichtlich weiterer Beschreibungen und Erläuterungen wird auf das Ausführungsbeispiel der Figur 4 verwiesen. Das Ausführungsbeispiel der Figur 5 hat neben den in der Beschreibung des Ausführungsbeispiels der Figur 4 genannten Vorteilen, zusätzlich den Vorteil, dass die einzelnen Komponenten des Sprühkondensators 3, des Verbindungsstücks 12 und des Sammelbehälters 31 in einem baukastenartigen System miteinander kombiniert werden können. Dadurch können je nach Bedarf bestimmte Kondensatoren mittels eines Verbindungsstückes 12 mit bestimmten Sammelbehältern 31 kombiniert werden.

Die Figur 6 zeigt ein weiteres Ausführungsbeispiel einer Vorrichtung und eines Verfahrens zur Kondensation von Dämpfen unter Vakuum. Dabei zeigt dieses Ausführungsbeispiel im Wesentlichen dasselbe Grundprinzip wie das Ausführungsbeispiel der Figur 4. Zur Vermeidung von Dopplungen wird für nähere Erläuterungen und Beschreibungen im Wesentlichen auf das Ausführungsbeispiel der Figur 4 verwiesen.

Der wesentliche Unterschied dieses Ausführungsbeispiels ist, dass im Kondensationsbereich 311 ein Sprühkondensator 3 und unterhalb des Sprühkondensator 3 ein Rohrbündelkondensator 3' angeordnet ist. Dadurch wird gewährleistet, dass eine Kondensation der Dämpfe sowohl an der Sprühflüssigkeit 51 des Sprühkondensators 3 als auch an den Kühlrohren 51' des Rohrbündelkondensator 3' erfolgen kann. Dadurch wird ein höherer Wirkungsgrad der Kondensation erreicht.

Die Sprühflüssigkeit 51 wird oberhalb des Rohrbündelkondensators 3' in den Kondensationsbereich 311 eingeleitet, wobei bei der Einleitung bereits Dämpfe mittels der Sprühflüssigkeit 51 kondensiert werden können. Das so gebildete Kondensat und die Sprühflüssigkeit 51 gelangen mithilfe der Schwerkraft in den Rohrbündelkondensator 3'. Auch an den Kühlrohren 51' des Rohrbündelkondensator 3', die über einen weiteren geschlossenen Kühlkreislauf gekühlt werden (hier nicht gezeigt), erfolgt eine Kondensation der Dämpfe.

Problematisch ist, dass der Rohrbündelkondensator 3' häufig durch Ablagerungen von in den Dämpfen mitgerissenen Fremdstoffen verstopft. Dies wird durch den oberhalb des Rohrbündelkondensators 3' angebrachten Sprühkondensator 3 verhindert. Die im oberen Bereich des Rohrbündelkondensators 3' eingeleitete Sprühflüssigkeit 51 und dort gebildetes Kondensat gelangen mithilfe der Schwerkraft innerhalb des Rohrbündelkondensator 3' und ermöglichen ein Reinigen der Kühlrohren 51' des Rohrbündelkondensator 3'. Die derart eingeleitete Flüssigkeit läuft an den Kühlrohren 51' entlang und nimmt eventuell angelagerte Fremdstoffe auf, bevor sie in den Sammelbereich 312 gelangt.

Weiterhin wird die durch den Rohrbündelkondensator 3' geleitet Sprühflüssigkeit 51 und entstandenes Kondensat erneut mittels der Kühlrohre 51' gekühlt, sodass sie nach dem Verlassen des Rohrbündelkondensators 3' erneut zur Kondensation von Dämpfen zur Verfügung stehen können und mit einer geringeren Temperatur in den Sammelbereich 312 eingeleitet werden können.

Eine derartige Anordnung ermöglicht folglich ein Waschen des Rohrbündelkondensators 3' und erhöht die Kondensationsleistung innerhalb des Kondensationsbereichs 311.

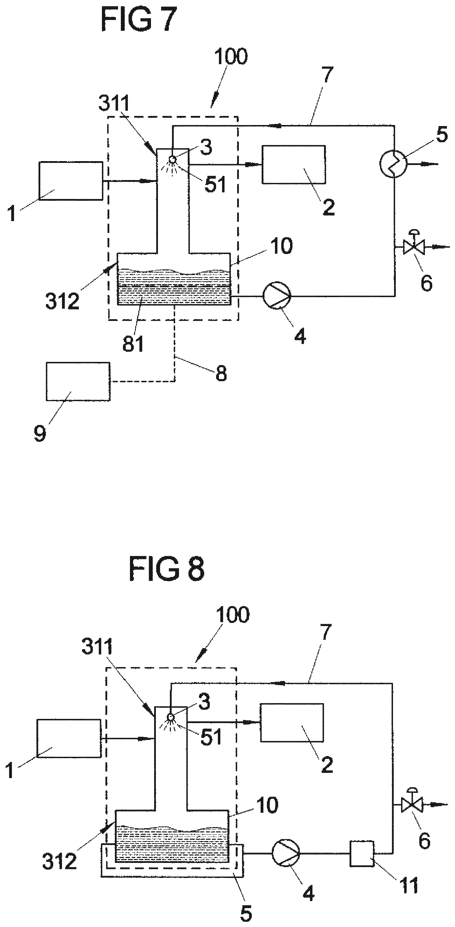

Die Figur 7 zeigt ein weiteres Ausführungsbeispiel einer Vorrichtung und eines Verfahrens zur Kondensation von Dämpfen unter Vakuum. Dabei zeigt dieses Ausführungsbeispiel im Wesentlichen dasselbe Grundprinzip wie das Ausführungsbeispiel der Figur 4. Zur Vermeidung von Dopplungen wird für nähere Erläuterungen und Beschreibungen im Wesentlichen auf das Ausführungsbeispiel der Figur 4 verwiesen.

Der wesentliche Unterschied dieses Ausführungsbeispiels ist, dass ein Beruhigungs- und Abscheidungsbereich 81 und eine Abscheidungsvorrichtung 8 an dem Sammelbereich 312 angeordnet sind. Durch den Beruhigungs- und Abscheidungsbereich 81 wird gewährleistet, dass sich Fremdstoffe, wie beispielsweise Feststoffe, absetzten können. Die Abscheidungsvorrichtung 8 dient dabei zur Abscheidung von Feststoffen oder anderer nicht mit der Sammelflüssigkeit mischfähigen Fremdstoffen, wie beispielsweise viskose Öle.

Bei der Einleitung von Dämpfen aus der Prozessapparatur 1 werden häufig mit der Sammelflüssigkeit nicht mischfähige Fremdstoffe, wie beispielsweise Feststoffe, bei der Einleitung des Dampfes in den Kondensatorbereich 311 mitgerissen. Diese Fremdstoffe gelangen somit in den Sammelbereich 312, wo sie sich dann von der Sammelflüssigkeit abscheiden.

Zur Vermeidung einer Beeinträchtigung des Kühlkreislaufes ist es notwendig, diese Fremdstoffe aus dem Sammelbereich 312 zu entfernen, um zu verhindern, dass diese beispielsweise die Pumpe 4 oder eine eventuelle Kühlvorrichtung 5 beschädigen oder blockieren. Auch eine Verstopfung der Düsen des Sprühkondensators 3 ist denkbar. Die sich am Boden des Sammelbereichs 312 abgelagerten Feststoffe können nun mittels der Abscheidungsvorrichtung 8 aus dem Sammelbereich 312 entfernt werden und in einem dafür vorgesehen Fremdstoffsammelbehälter 9 gesammelt werden. Dies ermöglicht ein einfaches Recyceln oder Entsorgen der Fremdstoffe.

Insbesondere ist als Abscheidungsvorrichtung 8 zur Abscheidung von Feststoffen oder nicht mit der Sammelflüssigkeit mischfähigen Fremdstoffen ein geeignetes Schleusensystem (hier nicht dargestellt) vorgesehen. Das Schleusensystem ermöglicht, dass das Vakuum innerhalb der Kondensations- und Sammeleinheit nicht gestört wird und ermöglicht somit einen kontinuierlichen Betrieb.

Das Ausführungsbeispiel der Figur 8 weist eine Kühlvorrichtung 5 auf, die direkt an dem Sammelbereich 312 angeordnet ist. Zusätzlich ist es möglich, dass eine weitere Kühlvorrichtung 5 (hier nicht dargestellt) innerhalb des Flüssigkeitskreislaufes angeordnet ist. Ein direktes Kühlen der Sammelflüssigkeit innerhalb des Sammelbereichs 312 ermöglicht es, den innerhalb der Kondensations- und Sammeleinheit 100 vorliegenden Dampfdruck zu verringern. Somit wird die zu erbringende Energieleistung der Vakuumapparatur ebenfalls verringert. Alternativ kann die Kühlvorrichtung (hier nicht dargestellt) auch innerhalb des Sammelbereichs 312 angeordnet sein.

Weiterhin kann es vorgesehen sein, dass die Sammelflüssigkeit innerhalb des Sammelbereichs 312 durch eine derartige Kühlvorrichtung 5 eine Vorkühlung erfährt. Eine derart vorgekühlte Sammelflüssigkeit ermöglicht es, die Temperatur der Kreislaufflüssigkeit mittels einer nachgeschalteten weiteren Kühlvorrichtung 5 (hier nicht dargestellt) in einem bestimmten Temperaturbereich schnell und flexibel einzustellen. Dies ist insbesondere von Vorteil, wenn es sich bei dem Kondensat um heiße, hochsiedende Flüssigkeiten handelt. Dabei wird die Hauptmenge der Energie mittels der an dem Sammelbereich 312 angeordneten Kühlvorrichtung 5 abgefangen. Durch eine nachgeschaltete Kühlvorrichtung 5 wird es somit ermöglicht, einen gewünschten Temperaturbereich von beispielsweise 10 °C bis 80 °C schnell und flexibel einzustellen, da ein Abkühlen der Kreislaufflüssigkeit innerhalb der nachgeschalteten Kühlvorrichtung 5 nur noch in einem Rahmen mit einem geringen Temperaturunterschied erfolgen muss.

### Bezugszeichenliste

- 1: Prozessapparatur
- 2: Vakuumapparatur
- 3: Sprühkondensator
- 3': Rohrbündelkondensator
- 31: Sammelbehälter
- 311: Kondensationsbereich
- 312: Sammelbereich
- 4: Pumpe
- 5: Kühlvorrichtung
- 51: Sprühflüssigkeit
- 51': Kühlrohr
- 6: Ausschleusungsvorrichtung
- 7: Leitung
- 8: Abscheidungsvorrichtung
- 81: Beruhigungs- und Abscheidungsbereich
- 9: Fremdstoffsammelbehälter
- 10: Gehäuse
- 100: Kondensations- und Sammeleinheit
- 11: Filtervorrichtung
- 12: Verbindungsstück

## Patentansprüche

1. Verfahren zur Kondensation von Dämpfen unter Vakuum, wobei die Dämpfe bei der Herstellung von Polyestern mittels einer Polykondensationsreaktion aus Dicarboxylsäuren oder Esterderivate davon und einem Diol anfallen, und wobei in den zu kondensierenden Dämpfe Wasser, Diole und Feststoffe enthalten sind,
wobei das Kondensationsverfahren in einer Vorrichtung zur Kondensation von Dämpfen unter Vakuum durchgeführt wird,
wobei die Vorrichtung mindestens einen räumlichen Kondensationsbereich (311), der mit einer Vakuumapparatur (2) zur Erzeugung eines Druckes unterhalb des Atmosphärendrucks verbunden ist, mit mindestens einem Sprühkondensator (3) und mindestens einem Kühlmittel (51) zur Kondensation der Dämpfe bei einem Druck unterhalb des Atmosphärendrucks aufweist, wobei die Kondensation über eine in den Sprühkondensator (3) eingeleitete Sprühflüssigkeit (51) als dem Kühlmittel erfolgt;
wobei die Vorrichtung mindestens einem räumlichen Sammelbereich (312) für Kondensat und Feststoffe mit mindestens einem Sammelbehälter (31) aufweist, der mit dem mindestens einen räumlichen Kondensationsbereich (311) verbunden ist,
wobei die Sammlung des Kondensats in dem mindestens einem Sammelbehälter (31) im Sammelbereich (312) erfolgt;
wobei die Kondensation des Dampfes in dem mindestens einem Sprühkondensator (3) im Kondensationsbereich (311) mit der Sprühflüssigkeit (51) mit einer Temperatur von 10-80 °C erfolgt, und wobei mindestens eine Kondensations- und Sammeleinheit (100) gebildet aus dem mindestens einen Kondensationsbereich (311) und dem mindestens einen räumlichen Sammelbereich (312) bei einem Druck zwischen 0,1 - 100 mbar gehalten wird,
**dadurch gekennzeichnet, dass**
der mindestens eine räumliche Kondensationsbereich (311) und der mindestens eine räumliche Sammelbereich (312) innerhalb eines vakuumdichten Gehäuses (10) die mindestens eine Kondensations- und Sammeleinheit (100) ausbilden, wodurch eine barometrische Abtauchung nicht erforderlich ist, so dass der Sammelbehälter (31) ebenfalls einen Druck unterhalb des Atmosphärendrucks aufweist;

2. Verfahren nach Anspruch 1, **dadurch gekennzeichnet, dass** die bei Polykondensationsreaktionen entstehenden Dämpfe, kondensiert werden ohne dass die Kondensationsflüssigkeit mit der Atmosphäre in Berührung kommt und dadurch die Aufnahme von Sauerstoff oder Wasser aus der Atmosphäre verhindert wird.

3. Verfahren nach mindestens einem der Ansprüche 1 oder 2, **dadurch gekennzeichnet, dass** die Kondensation der Dämpfe in dem mindestens eine räumliche Kondensationsbereich (311) durch mindestens einen Sprühkondensator (3) erfolgt.

4. Verfahren nach mindestens einem der vorhergehenden Ansprüche, **dadurch gekennzeichnet, dass** die Sammelflüssigkeit mittels einer Pumpe (4) über eine Leitung (7) in den Kondensationsbereich (311) gebracht wird.

5. Verfahren nach mindestens einem der vorhergehenden Ansprüche, **dadurch gekennzeichnet, dass** die Sammelflüssigkeit mittels einer Kühlvorrichtung (5) gekühlt wird.

6. Verfahren nach mindestens einem der vorhergehenden Ansprüche, **dadurch gekennzeichnet, dass** Fremdstoffe mittels einer Filtereinrichtung innerhalb der Leitung (7) abgetrennt werden.

7. Verfahren nach mindestens einem der vorhergehenden Ansprüche, **dadurch gekennzeichnet, dass** Teile der Sammelflüssigkeit über eine Ausschleusungsvorrichtung (6) ausgeschleust werden.

8. Verfahren nach mindestens einem der vorhergehenden Ansprüche, **dadurch gekennzeichnet, dass** die Gesamthöhe des Kondensationsbereichs (311) und des Sammelbereichs (312) oder der Kondensations- und Sammeleinheit (100) geringer ist, als die notwendige Gesamthöhe bei einer Vorrichtung mit einer barometrischen Abtauchung.

9. Verfahren nach mindestens einem der vorhergehenden Ansprüche, **dadurch gekennzeichnet, dass** als Dicarbonsäuren oder Dicarbonsäureester Terephthalsäure, Bisphenol A (2,2-Bis-(4-hydroxyphenyl)-propan), 2,6-Naphthalendicarbonsäuredimethylester, Phthalsäure, Oxalsäure, Isophthalsäure, Bernsteinsäure, Adipinsäure, Sebacinsäure oder Glutarsäure verwendet werden.

10. Verfahren nach mindestens einem der vorhergehenden Ansprüche, **dadurch gekennzeichnet, dass** als Diole 1,4-Butandiol, Ethylenglycol, Diethylenglycol, Triethylenglycol, 1,2-Propylenglycol, Dipropylenglycol, 1,6-Hexandiol, 1,3-Butandiol oder Neopentylglycol, Trimethylolpropan, Trimethylolethan oder Glycerin verwendet werden.

11. Verfahren nach einem mindestens einem der vorhergehenden Ansprüche, **dadurch gekennzeichnet, dass** als Ausgangsmaterialien Terephthalsäure und 1,4-Butandiol verwendet werden.

## Claims

1. A method for condensing vapours under vacuum, wherein the vapours are produced in the production of polyesters by means of a polycondensation reaction of dicarboxylic acids or ester derivatives thereof and a diol, and wherein water, diols and solids are contained in the vapours to be condensed,
wherein the condensation method is carried out in a device for condensing vapours under vacuum,
the device comprising at least one spatial condensation region (311) connected to a vacuum apparatus (2) for generating a pressure below atmospheric pressure, with at least one spray condenser (3) and at least one cooling means (51) for condensing the vapours at a pressure below atmospheric pressure, the condensation taking place via a spray liquid (51) as the cooling means introduced into the spray condenser (3);
wherein the device comprises at least one spatial collection region (312) for condensate and solids with at least one collection container (31) connected to the at least one spatial condensation region (311),
wherein the collection of the condensate takes place in the at least one collection container (31) in the collection region (312);
wherein the condensation of the vapour in the at least one spray condenser (3) takes place in the condensation region (311) with the spray liquid (51) having a temperature of 10-80 °C, and wherein at least one condensing and collecting unit (100) formed from the at the at least one spatial condensation region (311) and the at least one spatial collection region (312) is maintained at a pressure between 0.1 - 100 mbar,
**characterised in that**
the at least one spatial condensation region (311) and the at least one spatial collection region (312) form the at least one condensation and collection unit (100) within a vacuum-tight housing (10), whereby a barometric dipping is not required, so that the collection container (31) also has a pressure below atmospheric pressure;

2. Method according to claim 1, **characterised in that** the vapours formed during polycondensation reactions are condensed without the condensation liquid coming into contact with the atmosphere and thereby the absorption of oxygen or water from the atmosphere is prevented.

3. Method according to at least one of claims 1 or 2, **characterized in that** the condensation of the vapours in the at least one spatial condensation region (311) is carried out by at least one spray condenser (3).

4. Method according to at least one of the preceding claims, **characterised in that** the collection liquid is brought into the condensation region (311) by means of a pump (4) via a line (7).

5. Method according to at least one of the preceding claims, **characterised in that** the collection liquid is cooled by means of a cooling device (5).

6. Method according to at least one of the preceding claims, **characterised in that** foreign substances are separated by means of a filter device within the line (7).

7. Method according to at least one of the preceding claims, **characterised in that** parts of the collection liquid are discharged via a discharge device (6).

8. Method according to at least one of the preceding claims, **characterised in that** the total height of the condensation region (311) and the collection region (312) or the condensation and collection unit (100) is less than the necessary total height in a device with a barometric dipping.

9. Method according to at least one of the preceding claims, **characterized in that** terephthalic acid, bisphenol A (2,2-bis-(4-hydroxyphenyl)propane), dimethyl 2,6-naphthalenedicarboxylate, phthalic acid, oxalic acid, isophthalic acid, succinic acid, adipic acid, sebacic acid or glutaric acid are used as dicarboxylic acids or dicarboxylic acid esters.

10. Method according to at least one of the preceding claims, **characterized in that** 1,4-butanediol, ethylene glycol, diethylene glycol, triethylene glycol, 1,2-propylene glycol, dipropylene glycol, 1,6-hexanediol, 1,3-butanediol or neopentyl glycol, trimethylolpropane, trimethylolethane or glycerol are used as diols.

11. Method according to at least one of the preceding claims, **characterized in that** terephthalic acid and 1,4-butanediol are used as starting materials.

## Revendications

1. Procédé pour la condensation de vapeurs sous vide, dans lequel les vapeurs sont précipitées lors de la fabrication de polyesters au moyen d'une réaction de polycondensation à partir d'acides dicarboxyliques ou de dérivés d'ester de ceux-ci et d'un diol, et dans lequel de l'eau, des diols et des matières solides sont contenus dans les vapeurs à condenser,
dans lequel le procédé de condensation est réalisé dans un dispositif pour la condensation de vapeurs sous vide,
dans lequel le dispositif présente au moins une zone de condensation (311) spatiale, qui est reliée à l'appareil sous vide (2) pour produire une pression inférieure à la pression atmosphérique, avec au moins un condensateur de pulvérisation (3) et au moins un agent de refroidissement (51) pour la condensation des vapeurs à une pression inférieure à la pression atmosphérique, dans lequel la condensation est effectuée par l'intermédiaire d'un liquide de pulvérisation (51) introduit dans le condensateur de pulvérisation (3) en tant qu'agent de refroidissement ;
dans lequel le dispositif présente au moins une zone de collecte (312) spatiale pour du condensat et des matières solides avec au moins un contenant collecteur (31), qui est relié à l'au moins une zone de condensation (311) spatiale,
dans lequel la collecte du condensat est effectuée dans l'au moins un contenant collecteur (31) dans la zone de collecte (312) ;
dans lequel la condensation de la vapeur dans l'au moins un condensateur de pulvérisation (3) est effectuée dans la zone de condensation (311) avec le liquide de pulvérisation (51) à une température de 10 - 80 °C, et dans lequel au moins une unité de condensation et de collecte (100) formée de l'au moins une zone de condensation spatiale (311) et de l'au moins une zone de collecte spatiale (312) est maintenue à une pression entre 0,1 - 100 mbar, **caractérisé en ce que** l'au moins une zone de condensation (311) spatiale et l'au moins une zone de collecte (312) spatiale réalisent à l'intérieur d'un boîtier (10) étanche sous vide, l'au moins une unité de condensation et de collecte (100), une immersion barométrique n'étant pas nécessaire à cet effet de sorte que le contenant collecteur (31) présente de la même manière une pression inférieure à la pression atmosphérique.

2. Procédé selon la revendication 1, **caractérisé en ce que** les vapeurs se formant lors de réactions de polycondensation sont condensées sans que le liquide de condensation ne vienne en contact avec l'atmosphère et l'absorption d'oxygène ou d'eau provenant de l'atmosphère est ainsi empêchée.

3. Procédé selon au moins l'une quelconque des revendications 1 ou 2, **caractérisé en ce que** la condensation des vapeurs est effectuée dans l'au moins une zone de condensation (311) spatiale par au moins un condensateur de pulvérisation (3).

4. Procédé selon au moins l'une quelconque des revendications précédentes, **caractérisé en ce que** le liquide de collecte est amené dans la zone de condensation (311) par l'intermédiaire d'une conduite (7) au moyen d'une pompe (4).

5. Procédé selon au moins l'une quelconque des revendications précédentes, **caractérisé en ce que** le liquide de collecte est refroidi au moyen d'un dispositif de refroidissement (5).

6. Procédé selon au moins l'une quelconque des revendications précédentes, **caractérisé en ce que** des substances extérieures sont séparées à l'intérieur de la conduite (7) au moyen d'un système de filtration.

7. Procédé selon au moins l'une quelconque des revendications précédentes, **caractérisé en ce que** des parties du liquide de collecte sont évacuées par l'intermédiaire d'un dispositif d'évacuation (6).

8. Procédé selon au moins l'une quelconque des revendications précédentes, **caractérisé en ce que** la hauteur totale de la zone de condensation (311) et de la zone de collecte (312) ou de l'unité de condensation et de collecte (100) est inférieure à la hauteur totale nécessaire pour un dispositif avec une immersion barométrique.

9. Procédé selon au moins l'une quelconque des revendications précédentes, **caractérisé en ce que** sont utilisés en tant qu'acides dicarboxyliques ou esters d'acide dicarboxylique de l'acide téréphtalique, du bisphénol A (2,2-bis(4-hydroxyphényl)-propane), du diester diméthylique de l'acide naphtalène-2,6-dicarboxylique, de l'acide phtalique, de l'acide oxalique, de l'acide isophtalique, de l'acide succinique, de l'acide adipique, de l'acide sébacique ou de l'acide glutarique.

10. Procédé selon au moins l'une quelconque des revendications précédentes, **caractérisé en ce que** sont utilisés en tant que diols du 1,4-butanediol, de l'éthylène glycol, du diéthylène glycol, du triéthylène glycol, du 1,2-propylène glycol, du dipropylène glycol, du 1,6-hexanediol, 1,3-butanediol ou du néopentylglycol, du triméthylolpropane, du triméthyloléthane ou de la glycérine.

11. Procédé selon au moins l'une quelconque des revendications précédentes, **caractérisé en ce que** sont utilisés comme matériaux de départ de l'acide téréphtalique et du 1,4-butanediol.
